# EUROPÄISCHE PATENTSCHRIFT

(11) **EP 3 694 698 B1**
(45) Veröffentlichungstag und Bekanntmachung des Hinweises auf die Patenterteilung: **01.12.2021**
(21) Anmeldenummer: 19787209.6
(22) Anmeldetag: 11.10.2019
(51) Int. Cl.: B29C 49/42, B29C 49/06, B29L 31/00

(54) **ZANGE ZUR HALTERUNG VON WERKSTÜCKEN, INSBESONDERE VON VORFORMLINGEN ODER BEHÄLTERN**
GRIPPER FOR HOLDING WORKPIECES, IN PARTICULAR PREFORMS OR CONTAINERS
PINCE POUR LE SUPPORT DE PIÈCES, EN PARTICULIER D'ÉBAUCHES OU DE RÉCIPIENTS

(30) Priorität: 26.10.2018 DE 102018126797
(43) Veröffentlichungstag der Anmeldung: 19.08.2020
(73) Patentinhaber: KHS Corpoplast GmbH, 22145 Hamburg (DE)
(72) Erfinder: BAUMGARTE, Rolf, 22926 Ahrensburg (DE); KLATT, Dieter, 22147 Hamburg (DE); LEWIN, Frank, 22889 Tangstedt (DE); LINKE, Michael, 22159 Hamburg (DE); MEYER, Jan Fabian, 22337 Hamburg Hamburg (DE); SCHUMACHER, Dirk, 22767 Hamburg Hamburg (DE)
(74) Vertreter: Eisenführ Speiser
(86) Internationale Anmeldenummer: PCT/EP2019/077565
(87) Internationale Veröffentlichungsnummer: WO 2020/083663

(56) Entgegenhaltungen:
- DE-A1-102016 001 755
- US-A1- 2003 197 391
- US-A1- 2012 223 468
- US-A1- 2014 291 909

## Beschreibung

Die Erfindung betrifft eine Zange nach dem Oberbegriff des Anspruches 1 sowie ein Übergaberad nach Anspruch 7.

Gattungsgemäße Zangen kommen insbesondere zum Einsatz in Behälterbehandlungsmaschinen, z.B. Streckblasmaschinen zur Blasformung von Behältern, bei denen Behälter aus Vorformlingen geformt und z.B. anschließend befüllt werden, oder Maschinen zum simultanen Formen und Füllen (Form- und Füllmaschinen). In solchen Maschinen werden sogenannte Vorformlinge oder Preforms zunächst thermisch konditioniert und dann in einem anschließenden Schritt entweder mit Druckgas, z.B. Druckluft, oder flüssigem Füllgut zu fertigen Behältern expandiert. Zwischen den unterschiedlichen Behandlungsstationen sind in der Regel Übergaberäder vorgesehen, mit denen die Vorformlinge von einer Station, z. B. einer Heizgasse, an die nächste Station, z.B. die Umformungseinrichtung, übergeben werden. Die rotierenden Übergaberäder tragen mehrere mit ihren Greifeinrichtungen nach außen weisende Zangen, die die Vorformlinge in ihrem Halsbereich ergreifen und halten sowie an der nächsten Behandlungsstation wieder freigeben können. Meistens sind die Zangen gegenüber dem Übergaberad beweglich angeordnet, z.B. mit Teleskoparmen, die ein vor- bzw. zurückschieben der Zange erlauben, und werden über eine Kurvensteuerung in die gewünschte Position gebracht. Die Zangen werden dazu mit Kurvenrollen an ortsfest angeordneten Kurven vorbeigeführt.

Es versteht sich, dass die Zangen natürlich nicht nur zum Ergreifen von Vorformlingen in ihrem Halsbereich sondern auch zum Ergreifen von fertigen Behältern dienen können.

Vorformlinge und Behälter sind in der Regel nämlich in diesem Greifbereich identisch ausgebildet, oder anders ausgedrückt: der Greifbereich des Vorformlings wird beim Umformprozess nicht verändert.

In der Regel weisen die Zangen eine Zangenbasis auf, auf der zwei Zangenarme gegeneinander verschwenkbar angeordnet sind. Beide Zangenarme tragen jeweils an ihrem nach außen weisenden Ende ein Greifelement zur teilweisen Umschließung des Halsbereiches eines Vorformlings (bzw. eines Behälters) und werden unter Federspannung in einer Grundposition gehalten, d. h. einer Position, in der die Zangenarme aneinander anliegen und ihre Greifenden gemeinsam den Halsbereich eines Vorformlings umgreifen und halten können.

Bei den Zangen lassen sich eine aktive und eine passive Variante unterscheiden.

Bei der aktiven Variante werden die Zangenarme zum Ergreifen eines Vorformlings oder eines Behälters aktiv mittels eines Aktuators geöffnet. Dabei kann es sich z. B. um eine an einem der Zangenarme angreifende Kurvenrolle handeln, die wiederum von einer statischen Kurve in einem Übergaberad zum Öffnen des Zangenarms bewegt wird.

Bei der passiven Variante werden die Halsbereiche der Vorformlinge oder Behälter in die unter Federspannung in Grundposition gegeneinander gehaltenen Greifeinrichtungen hineingedrückt. Die Greifenden können dazu an ihren freien Enden so ausgeformt oder ausgestattet sein, dass ein Hineindrücken der Vorformlinge oder Behälter erleichtert wird (z. B. durch Rollen etc.).

Ein Problem beim Einsatz von Zangen an Übergaberäder besteht darin, dass es insbesondere bei den gewünschten hohen Durchsatzgeschwindigkeiten zu mechanischen Störungen etc. und in Folge davon zu Kollisionen der Zange mit anderen Teilen der Station oder Fremdkörpern kommen kann. Um im Fall solcher Kollisionen mechanische Schädigungen der Anlage zu minimieren, ist bei gattungsgemäßen Zangen vorgesehen, dass ihre Zangenarme gemeinsam gegen die Drehrichtung der Übergaberäder, bzw. gegen die Bewegungsrichtung anderer Übergabeeinrichtungen, ausgelenkt werden können und somit im Fall einer Kollision ausweichen können.

Aus der DE 102 17 898 A1 ist eine Greifeinrichtung für Verschlusskappen für Behälter bekannt.

Bei einer aus der DE 10 2009 051 656 A1 bekannten Zange ist die Zangenbasis verschwenkbar auf einem Grundelement gelagert und kann insgesamt mit den Zangenarmen die gewünschte Ausweichbewegung vornehmen. Seitlich an den Seitenflächen der Zangenbasis sind dazu unter Federspannung gehaltene Gegenelemente vorgesehen, die unter Normalbedingungen die Zangenbasis in einer gewünschten Betriebsposition halten und im Kollisionsfall aufklappen und die Zangenbasis freigegeben. Ein Problem bei der bekannten Zange ist, dass diese relativ aufwändig konstruiert ist und ein hohes Gewicht aufweist, was insbesondere bei schnell rotierenden Übergaberädern zu Problemen führen kann.

Aufgabe der Erfindung ist es eine Zange bereitzustellen, die die oben beschriebenen Eigenschaften aufweist und aufgrund ihrer einfachen Konstruktion gegenüber bekannten Zangen ein deutlich geringeres Gewicht aufweist.

Gelöst wird die Aufgabe mit einer Zange, die die kennzeichnenden Merkmale des Anspruches 1 aufweist. Auch ein Übergaberad nach Anspruch 7 löst diese Aufgabe.

Wie bei aus dem Stand der Technik bekannten Zangen weist auch die erfindungsgemäße Zange eine Zangenbasis auf, auf der zwei Zangenarme verschwenkbar gelagert sind. Die Zangenarme werden unter Federspannung in einer Grundposition gehalten, in der die Zange mit an den Enden der Zangenarme vorgesehenen Greifenden einen Vorformling oder einen Behälter im Halsbereich halten kann.

Erfindungsgemäß ist vorgesehen, dass einer der beiden Arme, im folgenden als Hauptarm bezeichnet, über eine Feder mit der Zangenbasis verspannt ist. Die Feder ist so ausgerichtet, dass sie den Hauptarm in Anlage gegen den anderen, im folgenden als Nebenarm bezeichneten Arm zieht, dergestalt, dass beide Arme in der Grundposition durch die Federkraft gehalten werden.

Weiterhin ist vorgesehen, dass Haupt- und Nebenarm jeweils in einem Gelenk an der Zangenbasis gelagert sind, wobei die Gelenke in Richtung der Längsachse der Zangenarme dergestalt vertikal versetzt sind, dass das Gelenk des Hauptarmes weiter von seinem Greifende entfernt ist als das Gelenk des Nebenarms. Mit anderen Worten bezogen auf ihre Schwenkpunkte sind die die Greifenden tragenden Hebel des Haupt-und Nebenarms unterschiedlich lang.

In der Grundposition liegen Haupt- und Nebenarm in mindestens einem Punkt bzw. Bereich aneinander an, der sich vom Greifende aus gesehen unterhalb vom Gelenk des Nebenarms, also auf der dem Greifende abgewandten Seite befindet. Der Nebenarm weist einen Hebel auf, der sich vom Gelenk aus gesehen nach unten erstreckt und mit dem der Nebenarm an dem Hauptarm anliegt.

Vorzugsweise liegen beide Arme in einem Punkt unterhalb des Gelenkes des Nebenarms und einem Punkt oberhalb des Gelenkes des Nebenarms, z.B. im Bereich der Greifenden aneinander an.

Der Versatz der Gelenke in vertikaler Richtung, wie bei der erfindungsgemäßen Zange vorgesehen, stellt einerseits sicher, dass beide Arme unter der Wirkung der Feder definiert in einer Grundposition ausgerichtet sind, in der bei eingesetzten Greifenden beide Arme parallel sind und der Nebenarm ein weiteres Verschwenken des Hauptarms in Richtung der Federkraft verhindert. Andererseits können beide Arme im Kollisionsfall gemeinsam gegen die Kraft der Feder ausgelenkt werden. Es versteht sich, dass die gemeinsame Auslenkung beider Arme nur in eine Richtung erfolgen kann. Daher ist es erforderlich im Hinblick auf z.B. die Bewegungsrichtung des Transport- oder Übergaberades die Zangenarme entsprechend anzuordnen. Konkret ist der Nebenarm in Bewegungsrichtung des Transportrades gesehen der vordere Arm, d. h. der Arm, der im Kollisionsfall zunächst auf ein Hindernis auftrifft und dann in seiner Auslenkbewegung den anliegenden Hauptarm gegen die Kraft der Feder ebenfalls auslenkt. Wenn die Zange mit den ausgelenkten Armen den Bereich der mechanischen Störung bzw. Kollision passiert hat, dann kann die Feder beide Arme wieder in die Grundposition zurückziehen.

Die erfindungsgemäße Konstruktion ist damit sehr einfach und kommt mit wesentlich weniger Bauelementen als gattungsgemäße Zangen aus. Wesentlicher Bestandteil der erfindungsgemäßen Zange ist, dass Haupt- und Nebenarm jeweils in einem eigenen Gelenk verschwenkbar angeordnet sind, wobei die beiden Gelenke wie oben beschrieben vertikal zueinander versetzt sind. Der Vertikalabstand der Gelenke zueinander ermöglicht, dass beide Arme in der gewünschten Weise im Kollisionsfall ausgelenkt werden können. Wie groß der Abstand sein muss, lässt sich auf einfache Weisedurch z.B. Simulation der gewünschten Zangenbewegungen in üblichen Zeichen- bzw. Konstruktionsprogrammen festlegen.

Zur Angabe des Vertikalabstandes der Gelenke kann man den in folgenden definierten Versatzwinkel verwenden. Der Versatzwinkel ist der Winkel zwischen einer ersten Linie durch das Gelenk des Hauptarmes senkrecht zu der Längsachse der Zangenarme in der Grundposition und einer sich von der ersten Linie nach oben erstreckenden Verbindungslinie zwischen den Gelenken.

Bevorzugt ist vorgesehen, dass der Versatzwinkel mindestens die Hälfte des gewünschten Auslenkungswinkels beträgt.

Gewünscht ist in der Regel eine Auslenkung beider Arme um mindestens ca. 45° im Kollisionsfall, bezogen auf den Hauptarm. Um eine solche Auslenkung zu gewährleisten, d.h. der Nebenarm kann ohne Probleme zusammen mit dem Hauptarm verschwenkt werden, reicht es aus, die Gelenke mit einem Versatzwinkel von 22,5° anzuordnen. Natürlich kann dieser Winkel auch größer gewählt werden, wesentlich ist jedoch, dass der Versatzwinkel mindestens die Hälfte des gewünschten Auslenkwinkels des Hauptarms beträgt. Ob der Versatzwinkel letztendlich größer gewählt wird, hängt zusätzlich aber auch z.B. von räumlichen Anforderungen ab. So verläuft z.B. die Feder in der Regel zwischen den Gelenken und es muss sichergestellt sein, dass sie genügend Raum hat, wenn sie bei Verschwenkung bzw. Auslenkung des Hauptarms ihre Position ändert.

Die erfindungsgemäße Zange weist eine Reihe von Vorteilen auf. Wie schon erwähnt ist sie konstruktiv in besonders einfacher Weise zu lösen.

In der passiven Variante benötigt die Zange nur eine Feder, die den Hauptarm mit der Zangenbasis verspannt. Weitere Kupplungen, zwischen z.B. dem Haupt- und Nebenarm sind nicht erforderlich.

Wie bereits mehrfach ausgeführt ist ein wesentlicher Aspekt der erfindungsgemäßen Zange, dass die Gelenke vertikal zueinander versetzt sind. Für die gewünschte Auslenkung beider Arme lässt sich der Vertikalabstand zwischen den beiden Gelenken in einfacher Weise wie oben ausgeführt festlegen. Wie oben ebenfalls erwähnt, kann darüber hinaus aber auch gewünscht sein, dass der Vertikalabstand zwischen den Gelenken noch weiteren z.B. räumlichen Anforderungen Rechnung trägt. Ein weiterer wesentlicher Punkt ist z. B. die Anpresskraft, mit der der Nebenarm in dem Punkt bzw. Bereich unterhalb seines Gelenkes an dem Hauptarm anliegt. Diese Anpresskraft ist umgekehrt proportional zu dem Abstand zwischen Gelenk des Nebenarms und dem Anlagepunkt bzw. Bereich. Mit anderen Worten, je größer dieser Abstand ist desto geringer ist die Anpresskraft und damit der Verschleiß insbesondere des Nebenarms im Bereich des Anlagepunktes. Insofern kann es vorteilhaft sein, auch deswegen den Vertikalversatz zwischen den Gelenken etwas größer zu gestalten als für die reine Auslenkung beider Arme erforderlich.

Wie oben ausgeführt kann die erfindungsgemäße Zange in einer passiven und einer aktiven Variante vorliegen. Bei der aktiven Variante müsste zusätzlich zu den bereits angegebenen Merkmalen noch ein Aktuator vorgesehen sein, der die Arme zum Ergreifen eines Vorformling oder eines Behälters öffnet. Im konkreten Fall würde bei der erfindungsgemäßen Zange hierzu ein Aktuator vorgesehen werden, der den Hauptarm ausschwenkt. Dabei könnte es sich insbesondere um eine Kurvenrolle handeln, die über einen Hebel an dem Hauptarm angelenkt ist und durch eine entsprechende statische Kurve in z.B. dem Übergaberad bewegt wird. Problematisch ist, dass der Nebenarm, sobald die Anlage mit dem Hauptarm aufgehoben wird, keine definierte Position mehr einnimmt. Um diesem Problem zu begegnen, ist in der aktiven Variante daher zusätzlich eine Kupplung zwischen dem Hauptarm und Nebenarm in einem Bereich unterhalb des Gelenkes des Nebenarms vorgesehen. Es kann sich hierbei z. B. um eine Feder handeln, die zwischen Haupt- und Nebenarm gespannt ist. Denkbar und bevorzugt wäre auch eine andere Form der Kraftkupplung vorzusehen, z. B. eine Magnetkupplung, die den Nebenarm in die gewünschte Position zieht.

Die Erfindung bezieht sich weiterhin auf ein Übergaberad für eine Behälterbehandlungsmaschine, insbesondere eine Streckblasmaschine, bei der Behälter aus Vorformlingen geformt und z.B. anschließend befüllt werden, oder eine Maschine zum simultanen Formen und Füllen (Form- und Füllmaschine), das mehrere auf seinem Außenumfang umlaufend aufgenommene und mit ihren Greifeinrichtungen nach außen weisende erfindungsgemäße Zangen gemäß Anspruch 1 aufweist. Übergaberäder mit Zangen sind grundsätzlich aus z.B. der DE 102 17 898 A1 bekannt.

Bevorzugt ist eine dem Übergaberad zugeordnete Steuerkurve zur Betätigung einer Kurvenrolle vorgesehen. Steuerkurven zur Betätigung von Greifzangen sind z.B. aus der DE 10 2009 051 656 A1 bekannt.

Im Folgenden soll die Erfindung anhand mehrerer Abbildungen näher erläutert werden.

Dabei zeigt:
- **Fig. 1**: eine Ansicht unten auf eine passive Ausführungsform der erfindungsgemäßen Zange,
- **Fig. 2**: zeigt die Zange aus Fig. 1 in ausgelenktem Zustand, und
- **Fig. 3**: zeigt eine Perspektivansicht der Zange aus Fig. 1 und 2, und
- **Fig. 4**: zeigt eine Perspektivansicht einer aktiven Ausführungsform der Zange, und
- **Fig. 5**: zeigt eine Ansicht unten auf die Zange aus Fig.4.

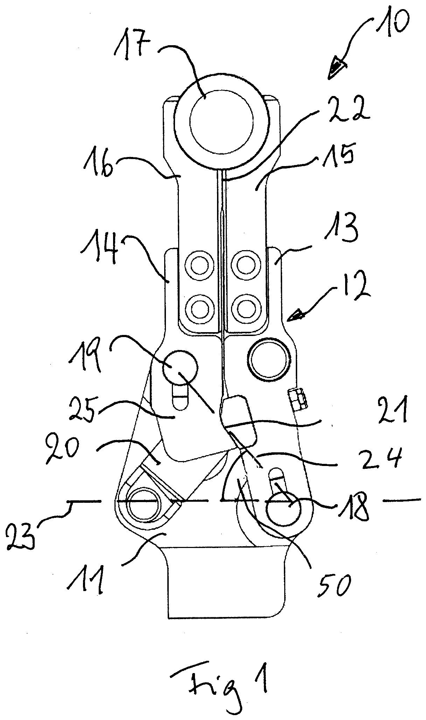

Fig. 1 zeigt ein Ausführungsbeispiel einer Zange 10 mit einer Zangenbasis 11 auf der zwei Zangenarme 12 angelenkt sind, von denen einer als Hauptarm 13 und der andere als Nebenarm 14 fungiert. An ihren freien Enden weisen der Haupt- und der Nebenarm 13, 14 jeweils ein Greifende 15, 16 auf. Jedes der Greifenden 15 und 16 ist zum teilweisen umschließen z.B. eines Vorformlings 17 in seinem Halsbereich geeignet. Zusammen umschließen sie in der dargestellten Grundposition der Arme 13 und 14 einen Halsbereich so weit, dass dieser zwischen den Greifenden gehalten ist.

Der Hauptarm 13 ist in einem Gelenk 18 und der Nebenarm 14 in einem Gelenk 19 an der Zangenbasis 11 gelagert. Der Hauptarm 13 ist weiterhin über eine Feder 20 mit der Zangenbasis 11 verbunden.

Die Feder 20 zieht den Hauptarm 13 in die dargestellte Grundposition, in der er in zwei Berührungspunkten 21 und 22 an dem Nebenarm 14 anliegt.

Man erkennt weiterhin, dass die Gelenke 18 und 19 in zueinander versetzt angeordnet sind, d. h. das Gelenk 19 des Nebenarms ist von seinem Greifende 16 weniger weit entfernt als das Gelenk 18 des Hauptarms von dem Greifende 15. Bezogen auf eine Linie 23, die das Gelenk 18 quer zur Längsachse der Zangenarme 13 und 14 schneidet, beträgt der Versatzwinkel 50 einer Verbindungslinie 24 zwischen dem Gelenk 18 und 19 mit der ersten Linie 23 ca. 45° im gezeigten Beispiel. Dieser Winkel kann aber durchaus andere Werte haben. Wichtig ist lediglich, dass bei einer Bewegung der hier gezeigten Zange gegen den Uhrzeigersinn im Falle einer Kollision die Arme 13 und 14 gegen die Bewegungsrichtung also im Beispiel nach rechts ausgelenkt werden können, um dem Hindernis ausweichen. Die Größe des Versatzwinkels 50 hängt dabei von dem gewünschten Auslenkwinkel und der Geometrie der Zangenarme ab. Er lässt sich in einfacher Weise z. B. durch Simulation in einem Zeichenprogramm ermitteln. In der Regel beträgt 50 der Winkel zwischen 10° und 45°, mindestens sollte er die Hälfte des gewünschten Auslenkwinkels des Hauptarms betragen.

Wesentlich ist weiterhin, dass der Nebenarm 14 auf seinem dem Greifende 16 abgewandten Ende unterhalb des Gelenkes 19 noch einen Hebelbereich 25 aufweist, mit dem sich der Nebenarm in dem Bereich 21 an den Hauptarm 13 anlegen kann.

Im Hinblick auf die mechanische Belastung insbesondere des Nebenarms kann eine Rolle spielen, dass die Anpresskraft im Berührungsbereich 21 abhängig von der Entfernung des Punktes 21 zum Gelenk 19 ist. Je größer die Entfernung ist, desto geringer wird die Anpresskraft und damit der Verschleiß des Nebenarms im Berührungsbereich 21. Insofern kann vorgesehen werden, dass das Gelenk 19 weiter in vertikaler Richtung zu dem Gelenk 18 versetzt ist, als es für die gewünschte Auslenkung der Zangenarme 13 und 14 im Kollisionsfall tatsächlich erforderlich ist. Auch räumliche Anforderungen, z.B. ein ausreichender Raum für die Bewegung der Feder 20 können eine Rolle bei der Festlegung des Vertikalversatzes der Gelenke spielen.

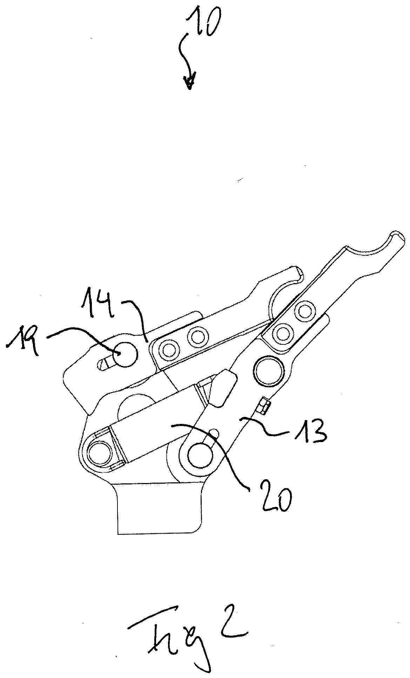

In Fig. 2 ist die Zange aus Fig. 1 dargestellt, wobei die Zangenarme 13 und 14 um einen Winkel von 45° bezogen auf den Hauptarm 13 ausgelenkt sind. Man erkennt weiterhin, dass der Nebenarm14 mit relativ viel Spiel an dem Hauptarm 13 anliegt. Bezogen auf die reine Auslenkung wäre es ohne weiteres möglich, das Gelenk 19 des Nebenarms 14 in vertikaler Richtung weniger stark zu versetzen. Im gezeigten Fall würden anstelle der tatsächlichen ca. 45° ca. 23° ausreichen, dass beide Arme in dem gewünschten Winkelbereich im Kollisionsfall ausschwenken können. Man erkennt in dieser Abbildung weiterhin, dass der Hauptarm 13 im Kollisionsfall gegen die Kraft der Feder 20 ausgelenkt wird. Dies erschwert einerseits die Auslenkung etwas, stellt aber andererseits sicher, dass nach Passieren des Kollisionsbereiches beide Arme sich automatisch wieder in die gewünschte Grundposition ausrichten.

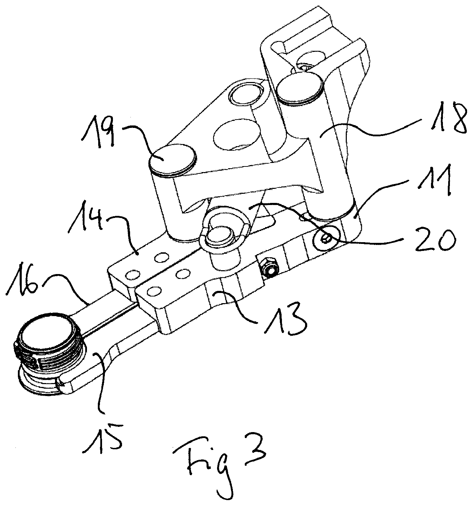

Fig. 3 zeigt die Zange 10 aus Fig. 1 und 2 in einer Perspektivdarstellung. Hauptarm 13 und Nebenarm 14 sind in Grundposition ausgerichtet. Der Hauptarm 13 ist mit der Feder 20 verspannt, und ist in dem Gelenk 18 verschwenkbar gelagert. Der Nebenarm 14 ist in einem Gelenk 19 verschwenkbar an der Zangenbasis 11 angeordnet. Beide Arme 13 und 14 halten mit ihren Greifenden 15 und 16 einen nur schematisch dargestellten Vorformling.

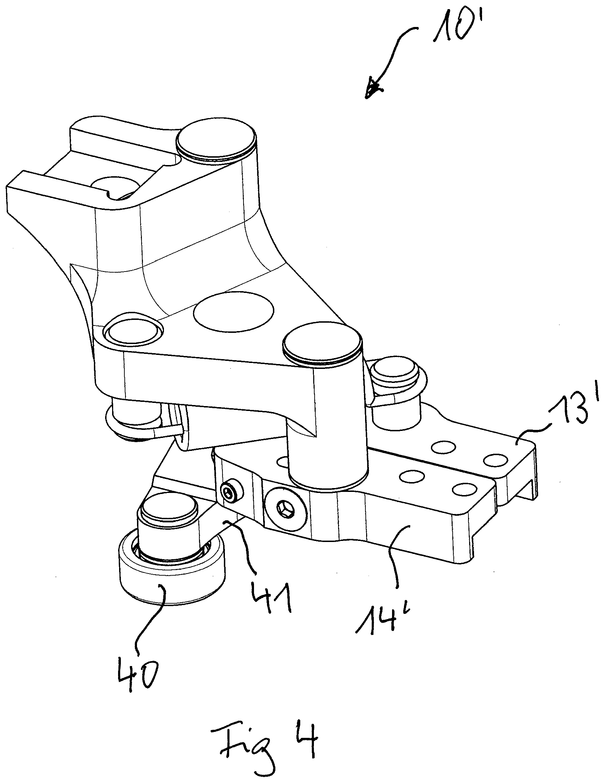

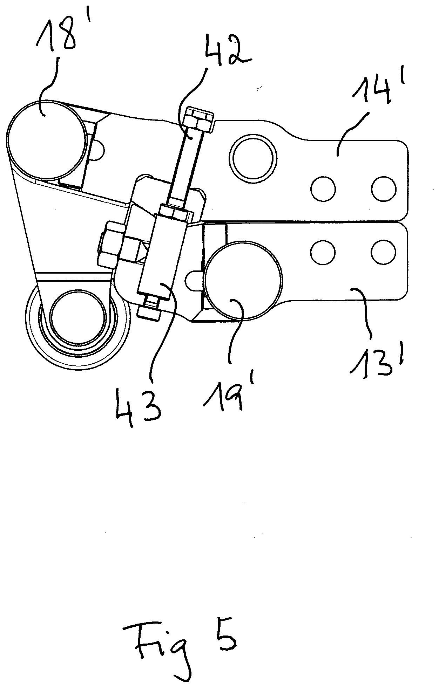

Fig. 4 zeigt eine aktive Ausführung einer erfindungsgemäßen Zange in Perspektivansicht. Diese Ausführungsform stimmt im Wesentlichen mit der in den Figuren 1-3 gezeigten Ausführungsform überein. Es werden daher für dieselben Bauelemente dieselben Bezugszeichen mit Apostroph verwendet und es wird insbesondere nur auf die Unterschiede eingegangen. Zusätzlich zu der in den Figuren 1-3 dargestellten Zange weist die in Fig. 4 dargestellte Zange 10' eine Kurvenrolle 40 auf, die über einen Hebel 41 mit einem Hauptarm 13' verbunden ist. Die Kurvenrolle 40 wird im Betrieb über eine Steuerkurve im z. B. Übergaberad nach vorne gedrückt und öffnet dann den Hauptarm 13'. Allerdings führt wie oben angesprochen ein Öffnen des Hauptraumes 13' dazu, dass die durch diesen vorgegebene Fixierung des Nebenarmes 14' aufgehoben ist. Mit anderen Worten der Nebenarm 14' kann eine nicht definierte Position einnehmen. Um dies zu vermeiden, ist wie in Fig. 5 zu erkennen zwischen Hauptarm 13' und Nebenarm 14' eine magnetische Kupplung 42, 43 unterhalb des Gelenkes 19' des Nebenarms 14' vorgesehen, die bei einem durch die Kurvenrolle 40 bewirkten Ausschwenken des Hauptarmes 13' den Nebenarm 14' in die gewünschte definierte Position zieht. Die magnetische Kupplung besteht im dargestellten Fall aus einem im Nebenarm angeordneten Magneten 42 und einer als Gegenpol dienenden Schraube 43 im Hauptarm. Anstelle einer magnetischen Kupplung kann auch eine Feder oder dergleichen vorgesehen werden, die zwischen den beiden Armen sitzt.

## Patentansprüche

1. Zange zur Halterung von Werkstücken, insbesondere von Vorformlingen oder Behältern in ihrem Halsbereich, mit einer Zangenbasis, auf der zwei Zangenarme verschwenkbar angeordnet sind, die jeweils Greifenden zur teilweisen Umschließung des Halsbereiches aufweisen, wobei die Zangenarme unter Federspannung in einer Grundposition gehalten sind, in der die Greifenden einen Halsbereich gemeinsam umschließen und halten können und bei Kontakt mit einem Hindernis gemeinsam in eine Richtung aus der Grundposition ausgeschwenkt werden können, **dadurch gekennzeichnet, dass** einer der Zangenarme als Hauptarm (13, 13') über eine Feder (20) mit der Zangenbasis (11) verspannt ist, die den Hauptarm (13, 13') in Anlage mit dem anderen als Nebenarm (14, 14') fungierenden Zangenarm in die Grundposition zieht, und Haupt- und Nebenarm (13, 13'; 14, 14') jeweils in einem Gelenk (18, 19) gelagert sind, wobei das Gelenk (19) des Nebenarmes (14) näher an seinem Greifende (16) liegt als das Gelenk (18) des Hauptarmes (13), und Haupt- und Nebenarm in der geschlossenen Position mindestens in zwei Bereichen (21, 22) aneinander anliegen, von denen sich der eine oberhalb des Gelenkes (19) des Nebenarmes (14) und der andere unterhalb davon auf einem sich vom Gelenk (19) nach unten erstreckenden Hebel (25) des Nebenarms (14) befindet.

2. Zange nach Anspruch 1, **dadurch gekennzeichnet, dass** das Gelenk (19) des Nebenarms (14) um einen Versatzwinkel von mindestens der Hälfte des gewünschten Auslenkwinkels des Hauptarms (13) zu dem Gelenk (18) des Hauptarms (13) versetzt ist.

3. Zange nach einem der vorangegangenen Ansprüche, **dadurch gekennzeichnet, dass** ein Aktuator zum Öffnen des Hauptarms (13) vorgesehen ist.

4. Zange nach Anspruch 3, **dadurch gekennzeichnet, dass** es sich bei dem Aktuator um eine Kurvenrolle (40) handelt, die über einen Hebel (41) an dem Hauptarm (13) angreift.

5. Zange nach einem der vorangegangenen Ansprüche, **dadurch gekennzeichnet, dass** zwischen Hauptarm (13) und Nebenarm (14) eine Kupplung vorgesehen ist.

6. Zange nach Anspruch 5, **dadurch gekennzeichnet, dass** es sich um eine magnetische Kupplung (42, 43) handelt.

7. Übergaberad für eine Behälterbehandlungsmaschine, insbesondere eine Streckblasmaschine oder Form- und Füllmaschine, **dadurch gekennzeichnet, dass** das Übergaberad mehrere auf seinem Außenumfang umlaufend aufgenommene und mit ihren Greifeinrichtungen (15, 16) nach außen weisende Zangen (10, 10') gemäß einem der Ansprüche 1 bis 6 aufweist.

8. Übergaberad nach Anspruch 7, **dadurch gekennzeichnet, dass** eine dem Übergaberad zugeordnete Steuerkurve zur Betätigung der Kurvenrolle (40) vorgesehen ist.

## Claims

1. Pincers for holding workpieces, in particular, of preforms or containers at their neck region, with a pincer base, on which two pincer arms are arranged in a swivelling manner, each of which comprising gripping ends for partially clasping around the neck area, wherein the pincer arms are held under spring tension in a default position in which the gripping ends can jointly clasp around and hold a neck region and, in the even of contact with an obstacle, can be swung out of the default position together in a single direction. **characterized in that** one of the pincer arms as the main arm (13, 13') is clamped via a spring (20) with the pincer base (11), which pulls the main arm (13, 13') in abutment with the other pincer arm acting as a secondary arm (14, 14') into the default position, and main and secondary arm (13, 13'; 14, 14') are each mounted at a joint (18, 19), wherein the joint (19) of the secondary arm (14) is closer to its gripping end (16) than the joint (18) of the main arm (13), and the main and secondary arms rest upon one another in the closed position in at least two areas (21, 22), one of which is located above the joint (19) of the secondary arm (14) and the other below it on a lever (25) of the secondary arm (14) extending downwards from the joint (19) .

2. Pincers according to Claim 1, **characterized in that** the joint (19) of the secondary arm (14) is offset by an offset angle of at least half of the desired deflection angle of the main arm (13) to the joint (18) of the main arm (13).

3. Pincers according to any one of the preceding claims, **characterized in that** an actuator is provided for opening the main arm (13).

4. Pincers according to Claim 3, **characterized in that** the actuator is a cam roller (40) which engages on the main arm (13) via a lever (41).

5. Pincers according to any one of the preceding claims, **characterized in that** (14) a coupling is provided between the main arm (13) and the secondary arm.

6. Pincers according to Claim 5, **characterized in that** it is a magnetic coupling (42, 43).

7. Transfer wheel for a container handling machine, in particular, a stretch blow-moulding machine or forming and filling machine, **characterized in that** the transfer wheel comprises a plurality of pincers (10, 10'), which are picked up on its outer circumference with their gripping devices (15, 16) pointing outwards, according to any one of Claims 1 to 6,

8. Transfer wheel according to Claim 7, **characterized in that** a control cam assigned to the transfer wheel is provided for actuating the cam roller (40).

## Revendications

1. Pince de maintien de pièces d'oeuvre, notamment de préformes ou de récipients maintenues au niveau du goulot, avec une base de pince sur laquelle deux branches de pince sont agencées de façon à pouvoir pivoter et présentent respectivement des extrémités de préhension pour entourer partiellement la partie goulot, les branches de pince étant maintenues par une tension de ressort en une position de base dans laquelle les extrémités de préhension peuvent entourer conjointement et maintenir la partie goulot et, lors d'un contact avec un obstacle, pivoter conjointement dans une direction hors de la position de base, **caractérisée en ce qu'**un ressort (20) assure une tension entre l'une des branches de pince, qui fait fonction de bras principal (13, 13'), et la base (11) de la pince et tire en position de base le bras principal (13, 13') en contact avec l'autre branche de pince qui fait office de bras secondaire (14, 14'), et **en ce que** le bras principal et le bras secondaire (13, 13'; 14, 14') sont respectivement logés avec une articulation (18, 19), l'articulation (19) du bras secondaire (14) étant plus proche de son extrémité de préhension (16) que ne l'est l'articulation (18) du bras principal (13), et **en ce que**, en position fermée, le bras principal et le bras secondaire ont au moins deux zones de contact (21, 22) dont l'une se trouve au-dessus de l'articulation (19) du bras secondaire (14) et l'autre en dessous de celle-ci sur un levier (25) du bras secondaire (14) s'étendant de l'articulation (19) vers le bas.

2. Pince selon la revendication 1, **caractérisée en ce que** l'articulation (19) du bras secondaire (14) est décalée par rapport à l'articulation (18) du bras principal (13) d'un angle de décalage d'au moins la moitié de l'angle de pivotement souhaité pour le bras principal (13).

3. Pince selon l'une des revendications précédentes, **caractérisée en ce qu**'un actionneur est prévu pour ouvrir le bras principal (13).

4. Pince selon la revendication 3, **caractérisée en ce que** l'actionneur est un galet de came (40) agissant sur le bras principal (13) par un levier (41).

5. Pince selon l'une des revendications précédentes, **caractérisée en ce qu**'un accouplement est prévu entre le bras principal (13) et le bras secondaire (14).

6. Pince selon la revendication 5, **caractérisée en ce qu**'il s'agit d'un accouplement magnétique (42, 43).

7. Roue de transfert pour une machine de traitement de récipients, notamment pour une machine de soufflage-étirage ou une machine de moulage et de remplissage, **caractérisée en ce que** la roue de transfert présente à sa périphérie en rotation plusieurs pinces (10, 10') selon l'une des revendications 1 à 6 dont les dispositifs de préhension (15, 16) sont orientés vers l'extérieur.

8. Roue de transfert selon la revendication 7, **caractérisée en ce qu**'une came de commande affectée à la roue de transfert est prévue pour l'actionnement du galet de came (40).
